# EUROPÄISCHE PATENTSCHRIFT

(11) **EP 4 452 520 B1**
(45) Veröffentlichungstag und Bekanntmachung des Hinweises auf die Patenterteilung: **26.08.2026**
(21) Anmeldenummer: 23729432.7
(22) Anmeldetag: 05.06.2023
(51) Int. Cl.: B05C 7/00, B05C 11/10, H01M 10/613, H01M 10/625, H01M 10/653, H01M 50/244, H01M 50/249

(54) **VERFAHREN UND APPLIKATIONSEINRICHTUNG ZUM APPLIZIEREN EINES FÜLLMATERIALS IN EINEN HOHLRAUM**
METHOD AND APPLICATION DEVICE FOR APPLYING A FILLING MATERIAL INTO A CAVITY
PROCÉDÉ ET DISPOSITIF D'APPLICATION POUR L'APPLICATION D'UN MATÉRIAU DE REMPLISSAGE DANS UNE CAVITÉ

(30) Priorität: 13.06.2022 DE 102022114834
(43) Veröffentlichungstag der Anmeldung: 30.10.2024
(73) Patentinhaber: Dürr Systems AG, 74321 Bietigheim-Bissingen (DE)
(72) Erfinder: SCHNUR, Frank, 74357 Böningheim (DE); JOCHUM, Sebastian, 71634 Ludwigsburg (DE)
(74) Vertreter: v. Bezold & Partner Patentanwälte - PartG mbB
(86) Internationale Anmeldenummer: PCT/EP2023/065012
(87) Internationale Veröffentlichungsnummer: WO 2023/241984

(56) Entgegenhaltungen:
- WO-A1-2020/207872
- DE-A1- 102019 132 395
- DE-A1- 102020 107 399

## Beschreibung

### Technisches Gebiet der Erfindung

Die Erfindung betrifft ein Verfahren zum Applizieren eines fluiden Füllmaterials in einen Hohlraum eines Bauteils, insbesondere in einem Batteriemodul einer elektrischen Batterie, insbesondere zur Spaltauffüllung in einem Batteriemodul. Weiterhin betrifft die Erfindung eine entsprechende Applikationseinrichtung.

### Hintergrund der Erfindung

Bei der Herstellung von Batteriemodulen für die Elektromobilität werden thermisch leitende Füllmaterialien verwendet, um Hohlräume in den Batteriemodulen aufzufüllen und die Batteriezellen in den Batteriemodulen thermisch mit dem Gehäuse des jeweiligen Batteriemoduls zu koppeln. Hierzu werden als Füllmaterial sogenannte "Gap-Filler" oder "Thermal Interface Materials" (TIM) verwendet, die in der Regel hochviskos, stark mit Festkörpern gefüllt und hochabrasiv sind und auch eine hohe Dichte und damit ein entsprechend hohes Gewicht aufweisen.

Aus DE 10 2019 109 208 B3 sind eine Applikationseinrichtung und ein entsprechendes Applikationsverfahren bekannt, die es ermöglichen, ein solches Füllmaterial in einen Hohlraum eines Batteriemoduls zu indizieren.

Nachteilig an diesem bekannten Stand der Technik ist die Tatsache, dass es beim Beenden eines Injektionsvorgangs zum Herausquellen des Füllmaterials aus dem Batteriemodul kommen kann, was unerwünscht ist.

Zum technischen Hintergrund der Erfindung ist auch hinzuweisen auf JP 2003-208 888 A, DE 10 2021 118 644 A1, WO 2020/207872 A1, DE 10 2019 132 395 A1 und WO 2014/127 277 A1.

Schließlich offenbart DE 10 2020 107 399 A1 eine Verfahren gemäß dem Oberbegriff von Anspruch 1. Dieses bekannte Verfahren löst jedoch nicht die vorstehend genannten Probleme.

### Beschreibung der Erfindung

Der Erfindung liegt deshalb die Aufgabe zugrunde, beim Injektionsfüllen von Hohlräumen in Batteriemodulen ein Herausquellen des Füllmaterials am Ende des Injektionsvorgangs zu verhindern.

Diese Aufgabe wird durch ein erfindungsgemäßes Verfahren bzw. eine entsprechende Applikationseinrichtung gemäß den unabhängigen Ansprüchen gelöst.

Das erfindungsgemäße Verfahren dient allgemein zum Applizieren eines fluiden Füllmaterials in einen Hohlraum eines Bauteils. In einem bevorzugten Ausführungsbeispiel der Erfindung handelt es sich bei dem Bauteil um ein Batteriemodul einer elektrischen Batterie. Die Erfindung ist jedoch hinsichtlich des Bauteils nicht auf ein Batteriemodul beschränkt, sondern eignet sich auch zur Auffüllung von Hohlräumen in anderen Bauteilen.

Zu dem zu injizierenden Füllmaterial ist zu erwähnen, dass es sich hierbei vorzugsweise um ein thermisch leitfähiges Füllmaterial handelt, wobei derartige thermisch leitfähige Füllmaterialien auch als "Gap-Filler" oder "Thermal Interface Materials" (TIM) bekannt sind und deshalb hinsichtlich ihrer Zusammensetzung nicht weiter beschrieben werden müssen. Die Erfindung ist jedoch hinsichtlich des Füllmaterials nicht auf derartige thermisch leitfähige Füllmaterialien beschränkt. Beispielsweise kann es sich bei dem Füllmaterial auch um einen Dickstoff handeln, wie beispielsweise um einen Dämmstoff, ein Dichtmittel oder einen Klebstoff, um nur einige Beispiele zu nennen.

Das erfindungsgemäße Verfahren sieht zunächst in Übereinstimmung mit dem eingangs beschriebenen bekannten Applikationsverfahren vor, dass das Füllmaterial durch mindestens einen Dosierer mit einem vorgegebenen Förderstrom zu einem Applikator gefördert wird.

Der im Rahmen der Erfindung verwendete Begriff eines Dosierers hat vorzugsweise die Bedeutung, dass der Förderstrom am Ausgang des Dosierers unabhängig von den Druckverhältnissen zwischen Eingang und Ausgang des Dosierers ist. Davon zu unterscheiden sind normale Pumpen, die zwar auch einen Förderstrom fördern, der jedoch von den Druckverhältnissen am Ausgang der Pumpe abhängt. Die Erfindung ist jedoch hinsichtlich des konstruktiven Aufbaus und der Funktionsweise des Dosierers nicht auf die vorstehend beschriebenen Dosierer im engeren Sinne entsprechend der üblichen Bedeutung in der Fachsprache beschränkt. Der im Rahmen der Erfindung verwendete Begriff eines Dosierers kann also auch herkömmliche Pumpen umfassen.

Weiterhin sieht das erfindungsgemäße Verfahren in Übereinstimmung mit dem eingangs beschriebenen bekannten Verfahren vor, dass der Applikator das Füllmaterial in den Hohlraum des Bauteils injiziert, wobei sich ein bestimmter Injektionsdruck einstellt.

Darüber hinaus sieht auch das erfindungsgemäße Verfahren in Übereinstimmung mit dem Stand der Technik vor, dass der Injektionsdruck des Füllmaterials durch einen Drucksensor gemessen wird.

Die Druckmessung hat jedoch im Rahmen der Erfindung einen anderen technischen Zweck als bei dem eingangs beschriebenen Stand der Technik. So beruht die Erfindung auf der technisch-physikalischen Erkenntnis, dass das störende Herausquellen des Füllmaterials aus dem Batteriemodul am Ende eines Injektionsvorgangs daher rührt, dass die Wände des Hohlraums elastisch sind und bei einem Injektionsvorgang aufgrund des Injektionsdruck leicht deformiert werden. Am Ende eines Injektionsvorgangs führt das Abschalten des Injektionsdrucks dann dazu, dass die elastischen Wände des Hohlraums entlastet werden und sich in ihre Ausgangsstellung zurückbewegen, was zu dem störenden Herausdrücken des Füllmaterials aus dem Hohlraum führt.

Das erfindungsgemäße Verfahren sieht deshalb vor, dass bei einem Injektionsvorgang der Druckanstieg des Injektionsdrucks ermittelt wird, wobei der Druckanstieg darauf beruht, dass eine Injektionsfront des Füllmaterials in dem Hohlraum auf die Wände des Hohlraums trifft und einen entsprechenden Gegendruck durch die Wände des Forums erfährt. Der Druckanstieg wird hierbei durch den vorstehend erwähnten Drucksensor gemessen. Bei einem bestimmten Druckanstieg des Injektionsdrucks ist dann ein Umschaltpunkt vorgesehen, an dem der Förderstrom des Dosierers reduziert wird. So erfolgt die Befüllung des Hohlraums mit dem Füllmaterial zu Beginn eines Injektionsvorgangs zunächst mit einem großen Förderstrom. Der Injektionsdruck steigt dann zunächst stark an und fällt dann nach Erreichen eines Maximalwerts leicht ab. Der Injektionsdruck steigt dann aber wieder an, wenn die Injektionsfront des Füllmaterials in dem Hohlraum auf die Wände des Hohlraums trifft. Zu diesem Zeitpunkt erfolgt dann die Umschaltung des Förderstroms auf einen kleineren Förderstrom.

Zu dem im Rahmen der Erfindung verwendeten Begriff eines Druckanstieges ist zu bemerken, dass der jeweilige Druckanstieg nicht notwendigerweise zu einem globalen Maximum führt. Es besteht vielmehr auch die Möglichkeit, dass der jeweilige Druckanstieg lediglich zu einem lokalen Maximum führt.

Die Reduzierung des Förderstroms an dem ersten Umschaltpunkt kann beispielsweise um einen absoluten Reduzierungswert oder um einen prozentualen Reduzierungswert erfolgen, wobei der Reduzierungswert optional auch die geometrischen Eigenschaften des Hohlraums (z.B. Form, Volumen) berücksichtigen kann. Darüber hinaus kann der Reduzierungswert optional von der Viskosität des Füllmaterials abhängig sein.

Bei der zeitlichen Festlegung des ersten Umschaltpunkts zur Reduzierung des Förderstroms wird vorzugsweise nicht der Injektionsdruck selbst ausgewertet, sondern die zeitliche Steigung des Injektionsdrucks. Der erste Umschaltpunkt für die Reduzierung des Förderstroms wird dann auf einen Zeitpunkt festgelegt, zu dem die zeitliche Steigung des gemessenen Injektionsdrucks einen bestimmten ersten Grenzwert überschreitet, wobei der erste Grenzwert vorzugsweise positiv ist, aber auch null oder negativ sein kann.

Nach der vorstehend beschriebenen Reduzierung des Förderstroms an dem ersten Umschaltpunkt bleiben der Förderstrom und der Injektionsdruck dann zunächst weitgehend konstant. Erst unmittelbar vor der vollständigen Befüllung des Hohlraums steigt der Injektionsdruck dann wieder an. Zu diesem Zeitpunkt ist dann ein zweiter Umschaltpunkt vorgesehen, an dem der Förderstrom des Dosierers weiter reduziert wird.

Zur zeitlichen Festlegung des zweiten Umschaltpunkts wird vorzugsweise wieder die zeitliche Steigung des gemessenen Injektionsdrucks ausgewertet, d.h. der zweite Umschaltpunkt wird in Abhängigkeit von der zeitlichen Steigung des gemessenen Injektionsdrucks festgelegt.

Vorzugsweise wird der zweite Umschaltpunkt hierbei auf einen Zeitpunkt festgelegt, wenn die zeitliche Steigung des gemessenen Injektionsdrucks positiv wird oder einen vorgegebenen zweiten Grenzwert übersteigt. Der zweite Grenzwert kann optional positiv, null oder negativ sein. Darüber hinaus besteht im Rahmen der Erfindung die Möglichkeit, dass die beiden Grenzwerte für die zeitliche Steigung des Injektionsdrucks gleich sind. Es besteht jedoch alternativ auch die Möglichkeit, dass die beiden Grenzwerte für die zeitliche Steigung des Injektionsdrucks an dem ersten Umschaltpunkt und an dem zweiten Umschaltpunkt unterschiedlich sind.

Es wurde vorstehend bereits erwähnt, dass der Förderstrom bei dem zweiten Umschaltpunkt weiter reduziert wird, um eine Überbefüllung des Hohlraums mit dem Füllmaterial zu verhindern. Beispielsweise kann der Förderstrom an dem zweiten Umschaltpunkt auf null reduziert werden. In einem bevorzugten Ausführungsbeispiel wird der Förderstrom jedoch an dem zweiten Förderstrom zunächst auf einen negativen Förderstrom reduziert, um den Injektionsdruck schnell auf null abzusenken. Erst anschließend wird der Förderstrom dann auf null reduziert.

Allgemein ist noch zu erwähnen, dass das Füllmaterial mittels eines Mischers aus mehreren Komponenten gemischt werden kann, wobei der Drucksensor den Injektionsdruck am Ausgang des Mischers messen kann. Es besteht jedoch im Rahmen der Erfindung auch die Möglichkeit, dass mehrere Drucksensoren vorgesehen sind, die den Injektionsdruck der verschiedenen Komponenten stromaufwärts vor dem Mischer messen.

Vorstehend wurde das erfindungsgemäße Verfahren beschrieben. Die Erfindung beansprucht jedoch auch Schutz für eine entsprechende Applikationseinrichtung mit einem Applikator, einem Dosierer, einem Drucksensor und einer Steuereinheit, die den ersten Drucksensor abfragt und den Dosierer entsprechend ansteuert.

Die Steuereinheit zeichnet sich hierbei dadurch aus, dass sie im Betrieb das vorstehend beschriebene erfindungsgemäße Verfahren ausführt. Die Steuereinheit kann hierzu einen Steuerrechner aufweisen, auf dem ein Steuerprogramm abläuft, dass bei einer Ausführung das vorstehend beschriebene erfindungsgemäße Verfahren ausführt.

Es besteht jedoch im Rahmen der Erfindung auch die Möglichkeit, dass der Drucksensor mechanisch mit dem Applikator verbunden ist und gemeinsam mit dem Applikator bewegt wird, beispielsweise durch einen Applikationsroboter.

In dem bevorzugten Ausführungsbeispiel der Erfindung weist die Applikationseinrichtung zwei Drucksensoren auf, um den Injektionsdruck des Füllmaterials zu messen, wobei der zweite Drucksensor vorzugsweise ebenfalls mechanisch mit dem Applikator verbunden ist und gemeinsam mit dem Applikator bewegt wird. Üblicherweise wird das Füllmaterial nämlich in eine Injektionsöffnung an dem Bauteil injiziert und kann zur Vermeidung einer Überbefüllung aus zwei Steigeröffnungen wieder aus dem Hohlraum austreten. Die beiden Drucksensoren sind dann vorzugsweise so platziert, dass sie den Injektionsdruck des Füllmaterials an den Steigeröffnungen des Bauteils messen.

Es besteht jedoch alternativ auch die Möglichkeit, dass der zweite Drucksensor getrennt von dem Applikator angeordnet ist, beispielsweise an einem Stopfen einer Öffnung des Hohlraums oder an einer Wand des Hohlraums.

In dem bevorzugten Ausführungsbeispiel der Erfindung weist die Applikationseinrichtung eine Traverse auf, wobei die beiden Drucksensoren an den gegenüberliegenden Enden der Traverse angebracht sind, um den Injektionsdruck an den beiden Steigeröffnungen an dem Bauteil zu messen. Der Applikator ist hierbei vorzugsweise ebenfalls an der Traverse angebracht und zwar vorzugsweise mittig zwischen den beiden Drucksensoren.

Hierbei ist zu erwähnen, dass die Drucksensoren an der Traverse jeweils an einer Lagerstelle gelagert sind, wobei die Lagerstelle vorzugsweise eine Ausweichbewegung der Drucksensoren aus ihrer Neutralstellung relativ zu der Traverse ermöglichen. Dies verhindert beim Aufsetzen der Applikationseinrichtung auf das Bauteil eine Beschädigung der Drucksensoren bzw. der Steigeröffnungen an dem Bauteil. Die Ausweichbewegung der Drucksensoren ist hierbei vorzugsweise rechtwinklig zur Applikationsrichtung ausgerichtet. Hierbei kann die Lagerstelle optional eine Feder oder eine Druckluftzuführung aufweisen, um den jeweiligen Drucksensor in seine Neutralstellung zurückzustellen.

Ferner besteht im Rahmen der Erfindung die Möglichkeit, dass der Applikator durch einen Bajonettverschluss lösbar mit der Traverse verbunden ist. Dieser Bajonettverschluss kann optional auch eine Leitungsdurchführung für Sensorleitungen der Drucksensoren enthalten.

Die einzelnen Drucksensoren können eine Kegelspitze aufweisen, um eine Selbstzentrierung des jeweiligen Drucksensors in der zugehörigen Steigeröffnung an dem Bauteil zu bewirken. Auch der Applikator kann eine entsprechende Kegelspitze aufweisen, um eine Selbstzentrierung des Applikators in der zugehörigen Injektionsöffnung an dem Bauteil zu bewirken.

Die Kegelspitze kann jeweils einen Dichtring tragen, um eine Abdichtung der Kegelspitze in der jeweiligen Öffnung (Injektionsöffnung bzw. Steigeröffnung) zu bewirken.

Weiterhin umfasst die erfindungsgemäße Applikationseinrichtung vorzugsweise einen Applikationsroboter zur Positionierung der Traverse mit dem an der Traverse befestigten Applikator und den an der Traverse befestigten Drucksensoren.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert.

### Kurzbeschreibung der Zeichnungen

Figur 1 zeigt eine schematische Darstellung einer erfindungsgemäßen Applikationseinrichtung zum Injizieren eines thermisch leitfähigen Füllmaterials in einen Hohlraum eines Batteriemoduls.
Figur 2 zeigt ein Flussdiagramm zur Erläuterung des Betriebsverfahrens der Applikationseinrichtung aus Figur 1.
Figur 3 zeigt ein Diagramm mit den Verläufen des Injektionsdrucks und des Förderstroms bei einem Injektionsvorgang.
Figur 4A zeigt eine Perspektivansicht einer erfindungsgemäßen Applikationseinrichtung mit einer Traverse mit einem Applikator und zwei Drucksensoren.
Figur 4B zeigt eine Querschnittsansicht durch die Applikationseinrichtung gemäß Figur 4A.
Figur 4C zeigt eine Querschnittsansicht durch den Applikator der Applikationseinrichtung gemäß den Figuren 4A und 4B.
Figur 4D zeigt eine Querschnittsansicht durch die Applikationseinrichtung gemäß den Figuren 4A-4C.

### Detaillierte Beschreibung der Zeichnungen

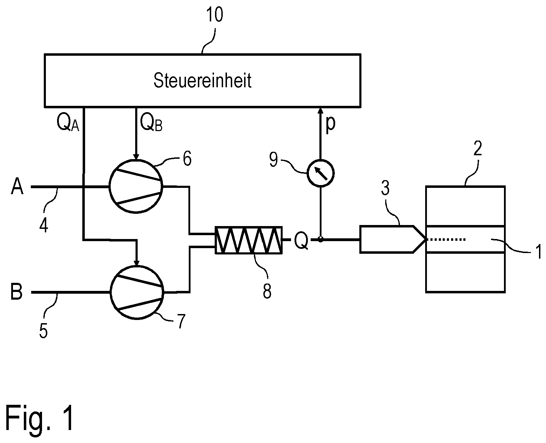

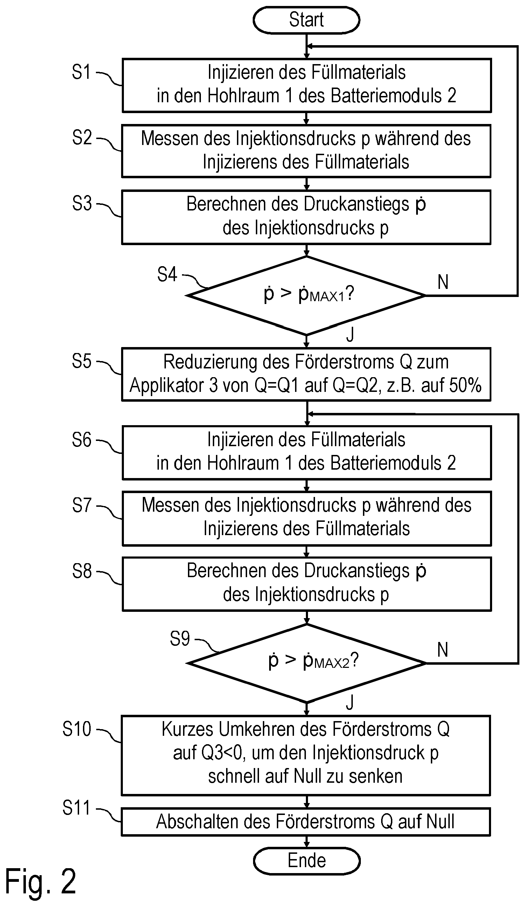

Im Folgenden wird nun das in Figur 1 dargestellte Ausführungsbeispiel einer erfindungsgemäßen Applikationseinrichtung beschrieben, wobei die Betriebsweise dieser Applikationseinrichtung in Figur 2 in Form eines Flussdiagramms dargestellt ist.

Die erfindungsgemäße Applikationseinrichtung dient zum Injizieren eines thermisch leitfähigen Füllmaterials in einen Hohlraum 1 in einem Batteriemodul 2, wobei das Batteriemodul 2 mit dem Hohlraum 1 hier nur schematisch dargestellt ist.

Zum Injizieren des Füllmaterials in den Hohlraum 1 weist die Applikationseinrichtung einen Applikator 3 auf, der zum Injizieren des Füllmaterials auf eine Injektionsöffnung an dem Hohlraum 1 aufgesetzt werden kann.

Das Füllmaterial besteht hierbei aus zwei Komponenten A und B, die über zwei Zuleitungen 4, 5 zugeführt werden, wobei in den beiden Zuleitungen 4, 5 jeweils ein Dosierer 6, 7 angeordnet ist. Die beiden Dosierer 6, 7 dosieren die beiden Komponenten A, B des Füllmaterials mit einem bestimmten Förderstrom Q_{A} bzw. Q_{B} zu einem Mischer 8, der die beiden Komponenten A, B zu dem Füllmaterial mischt. In diesem Ausführungsbeispiel ist der Mischer 8 ein statischer Mischer, wie beispielsweise ein Gittermischer oder Wendelmischer.

Das aus den beiden Komponenten A, B zusammengemischte Füllmaterial strömt dann mit einem Förderstrom Q von dem Mischer 8 zu dem Applikator 3 und wird in den Hohlraum 1 des Batteriemoduls 2 injiziert.

Zwischen dem Mischer 8 und dem Applikator 3 misst ein Drucksensor 9 den Injektionsdruck p, mit dem das Füllmaterial in den Hohlraum 1 injiziert wird und leitet den Messwert des Injektionsdrucks p an eine Steuereinheit 10 weiter. Die Steuereinheit 10 steuert dann die beiden Dosierer 6, 7 so an, dass diese den gewünschten Förderstrom C_{A} bzw. Q_{B} zu dem Mischer 8 fördern.

Zu den angegebenen Druckwerten ist allgemein zu bemerken, dass diese auf einen Umgebungsdruck p₀ bezogen sind, der einen Referenzdruck bildet. Bei einem Umgebungsdruck p₀=1 bar (Ein Bar entspricht ungefähr dem atmosphärischen Druck, d. h. 1 Bar = 100 000 Pa) bedeutet ein (relativer) Druckwert von p=2 bar also, dass der Druck absolut 3 bar beträgt.

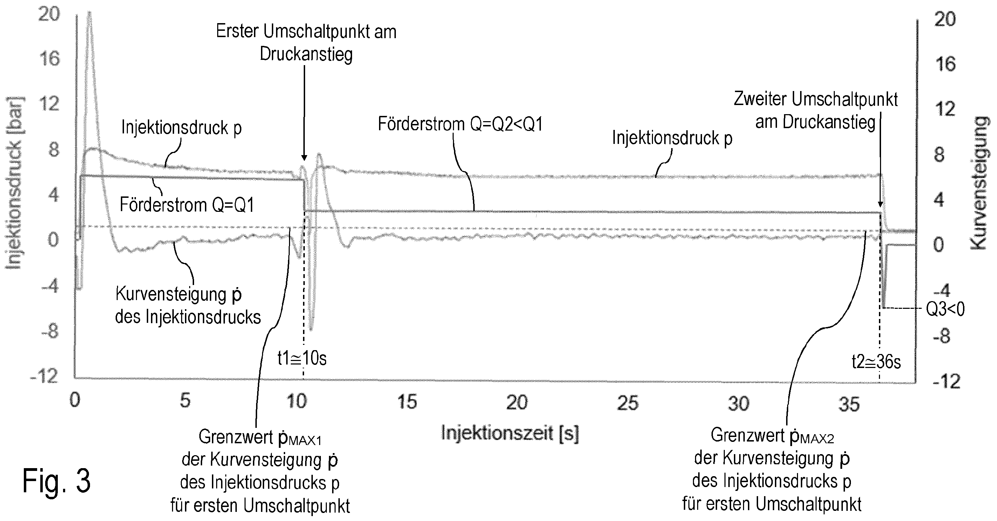

Im Folgenden wird nun unter Bezugnahme auf das Flussdiagramm gemäß Figur 2 und das Diagramm gemäß Figur 3 die Betriebsweise der Applikationseinrichtung gemäß Figur 1 beschrieben. Hierbei ist zu erwähnen, dass die nachfolgend nacheinander beschriebenen Schritte im Betrieb teilweise gleichzeitig ablaufen.

In einem ersten Schritt S1 wird das Füllmaterial von dem Applikator 3 in den Hohlraum 1 des Batteriemoduls 2 injiziert.

Dabei wird in einem Schritt S2 der Injektionsdruck p von dem Drucksensor 9 gemessen.

In einem Schritt S3 wird dabei der Druckanstieg ṗ Injektionsdrucks p gemessen, d.h. die zeitliche Änderung dp/dt des Injektionsdrucks p.

Falls der Druckanstieg ṗ einen vorgegebenen Maximalwert ṗ_{MAX1} nicht überschreitet, so werden die Schritte S1-S4 in einer Schleife wiederholt.

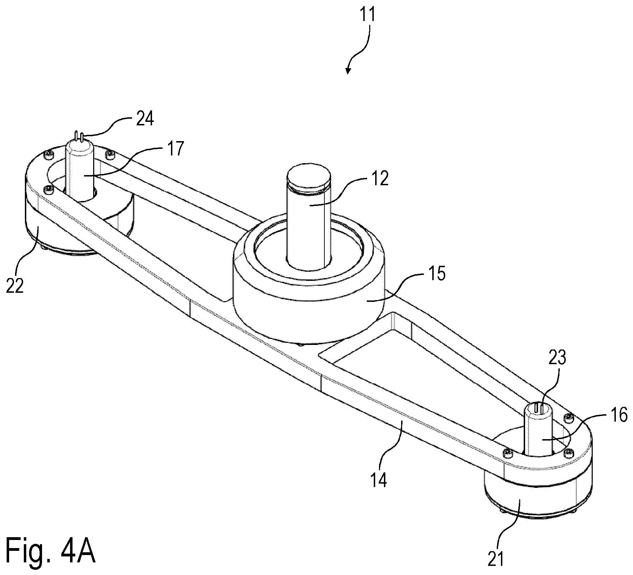

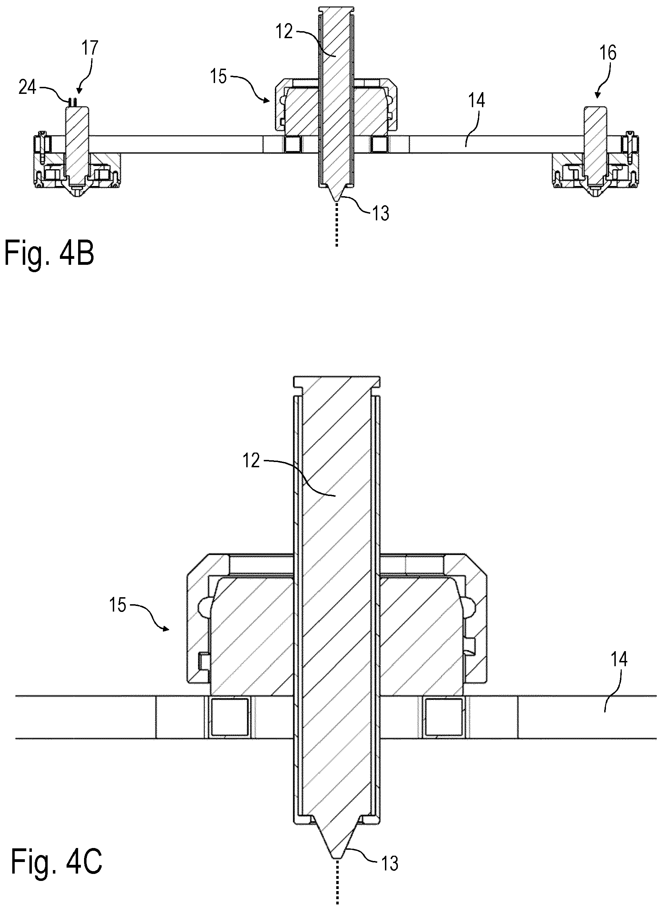

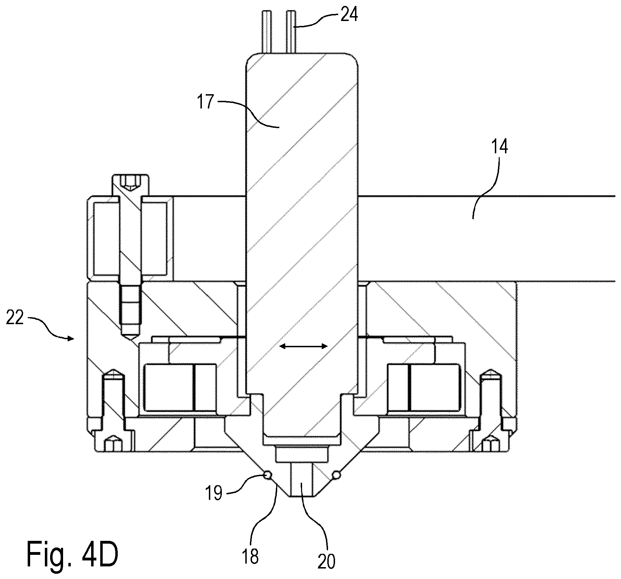

Falls der ermittelte Druckanstieg ṗ dagegen den Maximalwert ṗ_{MAX1} überschreitet, so wird in einem Schritt S5 der Förderstrom Q zu dem Applikator 3 von einem Wert Q=Q1 auf Q=Q2 reduziert, beispielsweise um 50 Prozent. Dies geschieht in dem Diagramm gemäß Figur 4 zum Zeitpunkt t=t1 bei einem ersten Umschaltpunkt. Der Druckanstieg ṗ an dem ersten Umschaltpunkt lässt sich darauf zurückführen, dass die Injektionsfront des Füllmaterials in dem zuvor noch ungefüllten Hohlraum 1 des Batteriemoduls 2 auf die Wände des Hohlraums 1 auftrifft, was zu einem entsprechenden Druckanstieg führt.

Im nächsten Schritt S6 wird dann mit dem Injizieren des Füllmaterials in den Hohlraum 1 des Batteriemoduls 2 fortgefahren.

Im nächsten Schritt S7 erfolgt dann wieder eine Messung des Injektionsdrucks p während des Injizierens des Füllmaterials in den Hohlraum 1 des Batteriemoduls 2.

Im nächsten Schritt S8 wird dann wieder der Druckanstieg ṗ des Injektionsdrucks p gemessen.

In einem Schritt S9 wird dann geprüft, ob der Druckanstieg ṗ einen vorgegebenen zweiten Maximalwert ṗ_{MAX2} überschreitet. In dem Diagramm gemäß Figur 3 sind die beiden Maximalwerte ṗ_{MAX1} und ṗ_{MAX2} gleich. Es besteht jedoch im Rahmen der Erfindung auch die Möglichkeit, dass die beiden Maximalwerte p_{Max1} und ṗ_{MAX2} gleich unterschiedlich sind.

Falls der Druckanstieg ṗ den vorgegebenen zweiten Maximalwert ṗ_{MAX2} nicht überschreitet, so werden die Schritte S6-S9 in einer Schleife wiederholt.

Andernfalls erfolgt dagegen in einem Schritt S10 ein kurzes Umkehren des Förderstroms Q auf Q=Q3<0, um den Injektionsdruck p schnell auf null zu senken. Dies geschieht in dem Diagramm gemäß Figur 3 am zweiten Umschaltpunkt zum Zeitpunkt t=t2.

Der Druckanstieg an dem zweiten Umschaltpunkt zum Zeitpunkt t=t2 ist darauf zurückzuführen, dass der Hohlraum 1 in dem Batteriemodul 2 nahezu vollständig gefüllt ist.

Schließlich wird der Förderstrom Q dann in einem Schritt S11 komplett abgeschaltet.

Vorteilhaft an dem vorstehend beschriebenen erfindungsgemäßen Betriebsverfahren ist die Tatsache, dass nach dem Injektionsvorgang keinerlei Füllmaterial aus dem Hohlraum 1 des Batteriemoduls 2 austritt. Das störende Herausquellen des Füllmaterials aus dem Hohlraum 1 des Batteriemoduls 2 wird also vollständig verhindert.

Im Folgenden wird nun das in den Figuren 4A-4D dargestellte Ausführungsbeispiel einer erfindungsgemäßen Applikationseinrichtung 11 beschrieben, die zum Injizieren eines thermisch leitfähigen Füllmaterials in einen Hohlraum eines Batteriemoduls eingesetzt werden kann.

Die Applikationseinrichtung 11 weist zunächst einen Applikator 12 auf, der zum Injizieren des Füllmaterials dient und eine Kegelspitze 13 aufweist, wobei die Kegelspitze 13 beim Aufsetzen des Applikators 12 auf eine Injektionsöffnung an einem Batteriemodul eine Selbstzentrierung des Applikators 12 in der Injektionsöffnung ermöglicht.

Darüber hinaus weist die Applikationseinrichtung 11 eine Traverse 14 auf, wobei die Traverse 14 durch einen Bajonettverschluss 15 mit dem Applikator 12 verbunden ist. Der Bajonettverschluss 15 ermöglicht hierbei eine leicht lösbare Verbindung zwischen dem Applikator 12 einerseits und der Traverse 14 andererseits.

An den beiden gegenüberliegenden Enden der Traverse 14 befindet sich jeweils ein Drucksensor 16, 17 zur Messung des Injektionsdrucks an zwei Steigeröffnungen des Batteriemoduls. So wird das Füllmaterial von dem Applikator 12 durch die Injektionsöffnung in das Batteriemodul injiziert und kann dann mit zunehmendem Füllungsgrad schließlich wieder aus den Steigeröffnungen des Batteriemoduls austreten, was jedoch verhindert werden soll. Bei einem Injektionsvorgang werden die Drucksensoren 16, 17 dann auf die beiden Steigeröffnungen aufgesetzt, um den Injektionsdruck in dem Batteriemodul an den Steigeröffnungen zu messen.

Die beiden Drucksensoren 16, 17 weisen hierbei jeweils eine Kegelspitze 18 auf, um eine Selbstzentrierung des jeweiligen Drucksensors 16, 17 in der zugehörigen Steigeröffnung zu ermöglichen.

Die Kegelspitzen 18 weisen jeweils einen Dichtring 19 auf, um die Kegelspitze 18 in der zugehörigen Steigeröffnung abzudichten.

Weiterhin ist aus Figur 4D ersichtlich, dass die Drucksensoren 16, 17 jeweils eine Messöffnung 20 aufweisen, um den Injektionsdruck an der jeweiligen Steigeröffnung zu messen.

Ferner ist zu erwähnen, dass die beiden Drucksensoren 16, 17 an den gegenüberliegenden Enden der Traverse 14 jeweils in einer Lagerstelle 21, 22 gelagert sind. Hierbei ist zu erwähnen, dass die beiden Lagerstellen 21, 22 jeweils eine nachgiebige Lagerung des Drucksensors 16, 17 in der jeweiligen Lagestelle 21, 22 ermöglichen, wie in Figur 4D durch den Doppelpfeil dargestellt ist. Dadurch werden mechanische Spannungen zwischen dem Batteriemodul einerseits und den Drucksensoren 16, 17 andererseits vermieden.

Weiterhin ist ersichtlich, dass die Drucksensoren Sensorleitungen 23, 24 aufweisen, um die jeweiligen Druckmesswerte weiterzuleiten.

### Bezugszeichenliste:

- 1: Hohlraum in dem Batteriemodul
- 2: Batteriemodul
- 3: Applikator
- 4: Zuleitung für Komponente A
- 5: Zuleitung für Komponente B
- 6: Dosierer für Komponente A
- 7: Dosierer für Komponente B
- 8: Mischer zum Mischen der Komponenten A und B
- 9: Drucksensor zum Messen des Injektionsdrucks zwischen Mischer und Applikator
- 10: Steuereinheit
- 11: Applikationseinrichtung
- 12: Applikator
- 13: Kegelspitze des Applikators
- 14: Traverse der Applikationseinrichtung
- 15: Bajonettverschluss zur Verbindung von Applikator und Traverse
- 16: Drucksensor an der Traverse der Applikationseinrichtung
- 17: Drucksensor an der Traverse der Applikationseinrichtung
- 18: Kegelspitzen der Drucksensoren
- 19: Dichtring an der Kegelspitze des Drucksensors
- 20: Messöffnung des Drucksensors
- 21: Lagerstelle zur nachgiebigen Lagerung des Drucksensors an der Traverse
- 21: Lagerstelle zur nachgiebigen Lagerung des Drucksensors an der Traverse
- 23: Sensorleitung des Drucksensors
- 24: Sensorleitung des Drucksensors
- A: Erste Komponente des Füllmaterial
- B: Zweite Komponente des Füllmaterials
- p: Injektionsdruck
- ṗ: Druckanstieg dp/dt
- C_{A}: Förderstrom der Komponente A
- C_{A}: Förderstrom der Komponente B
- Q1: Förderstrom vor dem ersten Umschaltpunkt
- Q2: Förderstrom zwischen erstem Umschaltpunkt und zweitem Umschaltpunkt
- Q3: Förderstrom nach dem zweiten Umschaltpunkt
- Q: Förderstrom der Mischung der beiden Komponenten A und B
- t1: Erster Umschaltpunkt
- t2: Zweiter Umschaltpunkt

## Patentansprüche

1. Verfahren zum Applizieren eines fluiden Füllmaterials in einen Hohlraum (1) eines Bauteils (2), insbesondere in einem Batteriemodul (2) einer elektrischen Batterie, insbesondere zur Spaltauffüllung in dem Batteriemodul (2), mit den folgenden Schritten:
a) Fördern des Füllmaterials durch mindestens einen Dosierer (6, 7) mit einem vorgegebenen Förderstrom (Q) zu einem Applikator (3; 12),
b) Injizieren des Füllmaterials durch den Applikator (3; 12) in den Hohlraum (1) des Bauteils (2), wobei sich ein bestimmter Injektionsdruck (p) einstellt, der zunächst stark ansteigt und dann nach Erreichen eines Maximalwerts leicht abfällt, woraufhin der Injektionsdruck dann aber wieder ansteigt, wenn die Injektionsfront des Füllmaterials in dem Hohlraum (1) auf die Wände des Hohlraums (1) trifft, und
c) Messen des Injektionsdrucks (p) durch einen Drucksensor (9; 16, 17),
**gekennzeichnet durch** folgende Schritte:
d) Ermitteln eines ersten Druckanstiegs des Injektionsdrucks (p), wobei der erste Druckanstieg des Injektionsdrucks (p) dann detektiert wird und einen ersten Umschaltpunkt bildet, wenn der Injektionsdruck (p) nach dem starken Anstieg zu Beginn eines Injektionsvorgangs und dem Erreichen des Maximalwerts wieder abfällt und dann wieder ansteigt, wenn die Injektionsfront des Füllmaterials in dem Hohlraum auf die Wände des Hohlraums trifft, und
e) Reduzierung des Förderstroms (Q) des Dosierers (6, 7) an dem ersten Umschaltpunkt zum Zeitpunkt des erneuten Ansteigens des Injektionsdrucks (p) bei dem ersten Druckanstieg des Injektionsdrucks (p).

2. Verfahren nach Anspruch 1, **dadurch gekennzeichnet,**
a) **dass** die Reduzierung des Förderstroms (Q) an dem ersten Umschaltpunkt um einen absoluten oder um einen prozentualen Reduzierungswert erfolgt, wobei der Reduzierungswert optional von geometrischen Eigenschaften des Hohlraums (1) abhängig ist, insbesondere von der Größe des Hohlraums (1),
b) **dass** der Reduzierungswert optional von der Viskosität des Füllmaterials abhängig ist.

3. Verfahren nach einem der vorhergehenden Ansprüche, **gekennzeichnet durch** folgende Schritte zum zeitlichen Festlegen des ersten Umschaltpunkts:
a) Ermitteln der zeitlichen Steigung (ṗ) des gemessenen Injektionsdrucks (p),
b) zeitliches Festlegen des ersten Umschaltpunkts durch eine Auswertung der zeitlichen Steigung (ṗ) des gemessenen Injektionsdrucks (p),

4. Verfahren nach Anspruch 3, **dadurch gekennzeichnet,**
a) **dass** der erste Umschaltpunkt auf einen Zeitpunkt (t1) festgelegt wird, an dem die zeitliche Steigung (ṗ) des gemessenen Injektionsdrucks (p) positiv wird oder einen vorgegebenen ersten Grenzwert (ṗ_{MAX1}) übersteigt,
b) **dass** der vorgegebene erste Grenzwert (ṗ_{MAX1}) optional positiv, Null oder negativ ist.

5. Verfahren nach einem der vorhergehenden Ansprüche, **gekennzeichnet durch** folgende Schritte:
a) Ermitteln eines zweiten Druckanstiegs des Injektionsdrucks (p), wobei der zweite Druckanstieg des Injektionsdrucks (p) vorzugsweise darauf beruht, dass der Hohlraum (1) nahezu vollständig mit dem Füllmaterial gefüllt ist, und
b) Reduzierung des Förderstroms (Q) des Dosierers (6, 7) an einem zweiten Umschaltpunkt bei dem zweiten Druckanstieg des Injektionsdrucks (p).
sowie vorzugsweise folgende Schritte zum zeitlichen Festlegen des zweiten Umschaltpunkts:
c) Ermitteln der zeitlichen Steigung (ṗ) des gemessenen Injektionsdrucks (p),
d) zeitliches Festlegen des zweiten Umschaltpunkts mit dem zweiten Druckanstieg des Injektionsdrucks (p) durch eine Auswertung der zeitlichen Steigung (ṗ) des gemessenen Injektionsdrucks (p),
e) wobei der zweite Umschaltpunkt vorzugsweise auf einen Zeitpunkt (t2) festgelegt wird, wenn die zeitliche Steigung (ṗ) des gemessenen Injektionsdrucks (p) positiv wird oder einen vorgegeben zweiten Grenzwert (ṗ_{MAX2}) übersteigt,
f) wobei der vorgegebene zweite Grenzwert (ṗ_{MAX2}) optional positiv, Null oder negativ ist,
g) wobei der vorgegebene zweite Grenzwert (ṗ_{MAX2}) optional gleich dem ersten Grenzwert (ṗ_{MAX1}) ist,
h) dass der Förderstrom (Q) bei dem zweiten Umschaltpunkt vorzugsweise auf null reduziert wird.

6. Verfahren nach Anspruch 5, **dadurch gekennzeichnet,**
a) **dass** der Förderstrom (Q) des Dosierers (6, 7) an dem zweiten Umschaltpunkt zunächst auf einen negativen Förderstrom (Q3) reduziert wird, um den Injektionsdruck (p) auf null abzusenken, und
b) **dass** der Förderstrom (Q) des Dosierers (6, 7) nach dem zweiten Umschaltpunkt dann auf null reduziert wird.

7. Verfahren nach einem der vorhergehenden Ansprüche, **dadurch gekennzeichnet,**
a) **dass** das Füllmaterial mittels eines Mischers (8) aus mehreren Komponenten (A, B) gemischt wird, und
b) **dass** der Drucksensor (9; 16, 17) den Injektionsdruck (p) am Ausgang des Mischers (8) misst.

8. Applikationseinrichtung (11) zum Applizieren eines fluiden Füllmaterials in einen Hohlraum (1) eines Bauteils (2), insbesondere in einem Batteriemodul (2) einer elektrischen Batterie, insbesondere zur Spaltauffüllung in dem Batteriemodul (2), mit
a) einem Applikator (3; 12) zum Injizieren des Füllmaterials in den Hohlraum (1), wobei sich ein bestimmter Injektionsdruck (p) einstellt,
b) mindestens einem Dosierer (6, 7) zur Förderung des Füllmaterials mit einem bestimmten Förderstrom (Q) zu dem Applikator (3; 12),
c) einem ersten Drucksensor (9; 16, 17) zur Messung des Injektionsdrucks (p) des Füllmaterials, und
d) einer Steuereinheit (10), die den ersten Drucksensor (9; 16, 17) abfragt und den Dosierer (6, 7) ansteuert,
**dadurch gekennzeichnet,**
e) **dass** die Steuereinheit (10) das Verfahren nach einem der vorhergehenden Ansprüche ausführt.

9. Applikationseinrichtung (11) nach Anspruch 8, **dadurch gekennzeichnet, dass** der erste Drucksensor (9; 16, 17) mechanisch mit dem Applikator (3; 12) verbunden und gemeinsam mit dem Applikator (3; 12) beweglich ist.

10. Applikationseinrichtung (11) nach Anspruch 8 oder 9, **gekennzeichnet durch** einen zweiten Drucksensor (9; 16, 17) zur Messung des Injektionsdrucks (p) des Füllmaterials.

11. Applikationseinrichtung (11) nach Anspruch 10, **dadurch gekennzeichnet,**
a) **dass** der zweite Drucksensor (9; 16, 17) ebenfalls mechanisch mit dem Applikator (3; 12) verbunden und gemeinsam mit dem Applikator (3; 12) beweglich ist, oder
b) **dass** der zweite Drucksensor getrennt von dem Applikator angeordnet ist, insbesondere
b1) an einem Stopfen einer Öffnung des Hohlraums oder
b2) an einer Wand des Hohlraums,
c) **dass** die beiden Drucksensoren (16, 17) vorzugsweise an den gegenüberliegenden Enden einer Traverse (14) angebracht sind, um den Injektionsdruck (p) an zwei Steigeröffnungen an dem Bauteil (2) zu messen, wobei die Steigeröffnungen einen Austritt von überschüssigem Füllmaterial aus dem Hohlraum (1) des Bauteils (2) ermöglichen, und
d) **dass** der Applikator (3; 12) vorzugsweise zwischen den beiden Drucksensoren (16, 17) an der Traverse (14) angebracht ist, insbesondere mittig, um das Füllmaterial in eine Injektionsöffnung an dem Bauteil (2) zu injizieren.

12. Applikationseinrichtung (11) nach Anspruch 11, **dadurch gekennzeichnet,**
a) **dass** die Drucksensoren (16, 17) an der Traverse (14) jeweils in einer Lagerstelle (21, 22) gelagert sind, wobei die Lagerstelle (21, 22) eine Ausweichbewegung der Drucksensoren (16, 17) aus ihrer Neutralstellung relativ zu der Traverse (14) ermöglicht,
b) **dass** die Ausweichbewegung der Drucksensoren (16, 17) vorzugsweise rechtwinklig zur Applikationsrichtung des Applikators (12) ausgerichtet ist,
c) **dass** die Lagerstelle (21, 22) optional eine Feder oder eine Druckluftzuführung aufweist, um den jeweiligen Drucksensor (6, 17) in seine Neutralstellung zurückzustellen.

13. Applikationseinrichtung nach Anspruch 11 oder 12, **dadurch gekennzeichnet,**
a) **dass** der Applikator (12) durch einen Bajonettverschluss (15) mit der Traverse (14) verbunden ist,
b) **dass** der Bajonettverschluss (15) optional auch eine Leitungsdurchführung für Sensorleitungen (23, 24) der Drucksensoren (16, 17) enthält.

14. Applikationseinrichtung nach einem der Ansprüche 10 bis 13, **dadurch gekennzeichnet,**
a) dass jeder der Drucksensoren (16, 17) jeweils eine Kegelspitze (18) aufweist, um eine Selbstzentrierung des Drucksensors (16, 17) in der zugehörigen Steigeröffnung an dem Bauteil (2) zu bewirken,
b) dass der Applikator (12) eine Kegelspitze (13) aufweist, um eine Selbstzentrierung des Applikators (12) in der zugehörigen Injektionsöffnung an dem Bauteil (2) zu bewirken, und/oder
b) dass die Kegelspitze (18) der Drucksensoren (16, 17) einen Dichtring (19) trägt, um die zugehörige Steigeröffnung an dem Bauteil (2) abzudichten, wenn die Kegelspitze (18) des Drucksensors (16, 17) in die zugehörige Steigeröffnung eingeführt ist.

15. Applikationseinrichtung nach einem der Ansprüche 11 bis 14, **gekennzeichnet durch** einen Applikationsroboter zur Positionierung der Traverse (14) mit dem an der Traverse (14) befestigten Applikator (3; 12) und den an der Traverse (14) befestigten Drucksensoren (16, 17).

## Claims

1. Method for applying a fluid filling material into a cavity (1) of a component (2), in particular in a battery module (2) of an electric battery, in particular for gap filling in the battery module (2), comprising the following steps:
a) Conveying the filling material by at least one metering device (6, 7) with a predetermined flow rate (Q) to an applicator (3; 12),
b) injecting the filling material into the cavity (1) of the component (2) by the applicator (3; 12), whereby a specific injection pressure (p) being established, which initially rises sharply and then falls slightly after reaching a maximum value, whereupon the injection pressure then rises again when the injection front of the moulding material in the cavity (1) comes into contact with the walls of the cavity (1), and
c) measuring the injection pressure (p) by a pressure sensor (9; 16, 17),
**characterized by** the following steps:
d) determining a first pressure increase of the injection pressure (p), wherein the first increase of the injection pressure (p) is then detected and forms a first switchover point when the injection pressure (p), following the sharp rise at the start of an injection process and after reaching its maximum value, falls again and then rises once more when the injection front of the moulding material in the cavity strikes the walls of the cavity, and
e) reducing the flow rate (Q) of the metering device (6, 7) at the first switchover point at the point when the injection pressure (p) begins to rise again at the first pressure increase of the injection pressure (p).

2. Method according to claim 1, **characterized in**
a) **that** the reduction of the flow rate (Q) at the first switchover point takes place by an absolute or by a percentage reduction value, the reduction value optionally being dependent on geometric properties of the cavity (1), in particular on the size of the cavity (1),
b) **that** the reduction value is optionally dependent on the viscosity of the filling material.

3. Method according to one of the preceding claims, **characterized by** the following steps for determining the timing of the first switchover point:
a) determining the temporal gradient (ṗ) of the measured injection pressure (p),
b) temporal determination of the first switchover point by evaluating the temporal gradient (p) of the measured injection pressure (p).

4. Method according to claim 3, **characterized in**
a) **that** the first switchover point is fixed at a time (t1) at which the temporal gradient (ṗ) of the measured injection pressure (p) becomes positive or exceeds a predetermined first limit value (ṗ_{MAX1}),
b) **that** the predetermined first limit value (ṗ_{MAX1}) is optionally positive, zero or negative.

5. Method according to one of the preceding claims, **characterized by** the following steps:
a) determining a second pressure increase of the injection pressure (p), the second pressure increase of the injection pressure (p) preferably being based on the fact that the cavity (1) is almost completely filled with the filling material, and
b) reducing the flow rate (Q) of the metering device (6, 7) at a second switchover point at the second pressure increase of the injection pressure (p),
and preferably the following steps for temporally setting the second switchover point:
c) determining the temporal gradient (ṗ) of the measured injection pressure (p),
d) setting the timing of the second switchover point with the second pressure increase of the injection pressure (p) by evaluating the time gradient (ṗ) of the measured injection pressure (p),
e) wherein the second switchover point is preferably set to a time (t2) when the temporal gradient (ṗ) of the measured injection pressure (p) becomes positive or exceeds a predetermined second limit value (ṗ_{MAX2}),
f) wherein the predetermined second limit value (ṗ_{MAX2}) is optionally positive, zero or negative,
g) wherein the predetermined second limit value (ṗ_{MAX2}) is optionally equal to the first limit value (ṗ_{MAX1}),
h) that the flow rate (Q) is preferably reduced to zero at the second switchover point.

6. Method according to claim 5, **characterized in**
a) **that** the flow rate (Q) of the metering device (6, 7) is initially reduced to a negative flow rate (Q3) at the second switchover point in order to reduce the injection pressure (p) to zero, and
b) **that** the flow rate (Q) of the metering device (6, 7) is then reduced to zero after the second switchover point.

7. Method according to one of the preceding claims, **characterized in**
a) **that** the filling material is mixed from several components (A, B) by means of a mixer (8), and
b) **that** the pressure sensor (9; 16, 17) measures the injection pressure (p) at the outlet of the mixer (8).

8. Application device (11) for applying a fluid filling material into a cavity (1) of a component (2), in particular in a battery module (2) of an electric battery, in particular for gap filling in the battery module (2), having
a) an applicator (3; 12) for injecting the filling material into the cavity (1), whereby a certain injection pressure (p) is established,
b) at least one metering device (6, 7) for conveying the filling material to the applicator (3; 12) at a specific flow rate (Q),
c) a first pressure sensor (9; 16, 17) for measuring the injection pressure (p) of the filling material, and
d) a control unit (10) which interrogates the first pressure sensor (9; 16, 17) and controls the metering device (6, 7),
**characterized in**
e) **that** the control unit (10) carries out the method according to one of the preceding claims.

9. Application device (11) according to claim 8, **characterized in that** the first pressure sensor (9; 16, 17) is mechanically connected to the applicator (3; 12) and is movable together with the applicator (3; 12).

10. Application device (11) according to claim 8 or 9, **characterized by** a second pressure sensor (9; 16, 17) for measuring the injection pressure (p) of the filling material.

11. Application device (11) according to claim 10, **characterized in**
a) **that** the second pressure sensor (9; 16, 17) is also mechanically connected to the applicator (3; 12) and is movable together with the applicator (3; 12), or
b) **that** the second pressure sensor is arranged separately from the applicator, in particular
b1) on a plug of an opening of the cavity or
b2) on a wall of the cavity,
c) **that** the two pressure sensors (16, 17) are preferably mounted at the opposite ends of a traverse (14) in order to measure the injection pressure (p) at two riser openings on the component (2), the riser openings allowing excess filling material to escape from the cavity (1) of the component (2), and
d) **that** the applicator (3; 12) is preferably mounted between the two pressure sensors (16, 17) on the traverse (14), in particular centrally, in order to inject the filling material into an injection opening on the component (2).

12. Application device (11) according to claim 11, **characterized in**
a) **that** the pressure sensors (16, 17) are each mounted on the traverse (14) in a bearing point (21, 22), the bearing point (21, 22) enabling an evasive movement of the pressure sensors (16, 17) from their neutral position relative to the traverse (14),
b) **that** the evasive movement of the pressure sensors (16, 17) is preferably oriented at right angles to the application direction of the applicator (12),
c) **that** the bearing point (21, 22) optionally has a spring or a compressed air supply in order to return the respective pressure sensor (6, 17) to its neutral position.

13. Application device according to claim 11 or 12, **characterized in**
a) **that** the applicator (12) is connected to the traverse (14) by a bayonet lock (15),
b) **that** the bayonet lock (15) optionally also contains a cable bushing for sensor cables (23, 24) of the pressure sensors (16, 17).

14. Application device according to one of claims 10 to 13, **characterized in**
a) that each of the pressure sensors (16, 17) has a respective conical tip (18) in order to effect self-centering of the pressure sensor (16, 17) in the associated riser opening on the component (2),
b) that the applicator (12) has a conical tip (13) to effect self-centering of the applicator (12) in the associated injection opening on the component (2), and/or
b) that the conical tip (18) of the pressure sensors (16, 17) carries a sealing ring (19) to seal the associated riser opening on the component (2) when the conical tip (18) of the pressure sensor (16, 17) is inserted into the associated riser opening.

15. Application device according to any one of claims 11 to 14, **characterized by** an application robot for positioning the traverse (14) with the applicator (3; 12) attached to the traverse (14) and the pressure sensors (16, 17) attached to the traverse (14).

## Revendications

1. Procédé pour l'application d'un matériau de remplissage fluide dans une cavité (1) d'un composant (2), en particulier dans un module de batterie (2) d'une batterie électrique, notamment pour le remplissage d'interstice dans le module de batterie (2), comprenant les étapes suivantes:
a) acheminement du matériau de remplissage par au moins un doseur (6, 7) avec un débit d'acheminement (Q) prédéterminé vers un applicateur (3; 12),
b) injection du matériau de remplissage par l'applicateur (3; 12) dans la cavité (1) du composant (2), une certaine pression d'injection (p) s'établissant, qui augmente d'abord fortement puis, après avoir atteint une valeur maximale, diminue légèrement, puis la pression d'injection augmente à nouveau lorsque le front d'injection du matériau de remplissage dans la cavité (1) rencontre les parois de la cavité (1), et
c) mesure de la pression d'injection (p) par un capteur de pression (9; 16, 17),
**caractérisé par** les étapes suivantes:
d) détermination d'une première augmentation de pression de la pression d'injection (p), la première augmentation de pression de la pression d'injection (p) étant alors détectée et formant un premier point de commutation, lorsque la pression d'injection (p), après la forte augmentation au début d'une opération d'injection et l'atteinte de la valeur maximale, diminue à nouveau puis augmente à nouveau lorsque le front d'injection du matériau de remplissage dans la cavité rencontre les parois de la cavité, et
e) réduction du débit d'acheminement (Q) du doseur (6, 7) au premier point de commutation au moment de la nouvelle augmentation de la pression d'injection (p) lors de la première augmentation de pression de la pression d'injection (p).

2. Procédé selon la revendication 1, **caractérisé en ce que**
a) la réduction du débit d'acheminement (Q) au premier point de commutation s'effectue selon une valeur de réduction absolue ou selon une valeur de réduction en pourcentage, la valeur de réduction étant optionnellement dépendante des caractéristiques géométriques de la cavité (1), notamment de la taille de la cavité (1),
b) la valeur de réduction est optionnellement dépendante de la viscosité du matériau de remplissage.

3. Procédé selon l'une des revendications précédentes, **caractérisé par** les étapes suivantes pour la détermination temporelle du premier point de commutation:
a) détermination de la pente temporelle (ṗ) de la pression d'injection (p) mesurée,
b) détermination temporelle du premier point de commutation par une évaluation de la pente temporelle (ṗ) de la pression d'injection (p) mesurée.

4. Procédé selon la revendication 3, **caractérisé en ce que**
a) le premier point de commutation est déterminé à un instant (t1) où la pente temporelle (ṗ) de la pression d'injection (p) mesurée devient positive ou dépasse une première valeur limite prédéterminée (ṗ_{MAX1}),
b) la première valeur limite prédéterminée (ṗ_{MAX1}) est optionnellement positive, nulle ou négative.

5. Procédé selon l'une des revendications précédentes, **caractérisé par** les étapes suivantes:
a) détermination d'une deuxième augmentation de pression de la pression d'injection (p), la deuxième augmentation de pression de la pression d'injection (p) reposant de préférence sur le fait que la cavité (1) est presque complètement remplie avec le matériau de remplissage, et
b) réduction du débit d'acheminement (Q) du doseur (6, 7) à un deuxième point de commutation lors de la deuxième augmentation de pression de la pression d'injection (p),
ainsi que de préférence les étapes suivantes pour la détermination temporelle du deuxième point de commutation:
c) détermination de la pente temporelle (p) de la pression d'injection (p) mesurée,
d) détermination temporelle du deuxième point de commutation avec la deuxième augmentation de pression de la pression d'injection (p) par une évaluation de la pente temporelle (ρ) de la pression d'injection (p) mesurée,
e) le deuxième point de commutation étant de préférence déterminé à un instant (t2) lorsque la pente temporelle (ṗ) de la pression d'injection (p) mesurée devient positive ou dépasse une deuxième valeur limite prédéterminée (ṗ_{MAX2}),
f) la deuxième valeur limite prédéterminée (ṗ_{MAX2}) étant optionnellement positive, nulle ou négative,
g) la deuxième valeur limite prédéterminée (ṗ_{MAX2}) étant optionnellement identique à la première valeur limite (ṗ_{MAX1}),
h) le débit d'acheminement (Q) étant de préférence réduit à nul au deuxième point de commutation.

6. Procédé selon la revendication 5, **caractérisé en ce que**
a) le débit d'acheminement (Q) du doseur (6, 7) est d'abord réduit à un débit d'acheminement négatif (Q3) au deuxième point de commutation, afin d'abaisser la pression d'injection (p) à nul, et
b) le débit d'acheminement (Q) du doseur (6, 7) est ensuite réduit à nul après le deuxième point de commutation.

7. Procédé selon l'une des revendications précédentes, **caractérisé en ce que**
a) le matériau de remplissage est mélangé par un mélangeur (8) à partir de plusieurs composants (A, B), et
b) le capteur de pression (9; 16, 17) mesure la pression d'injection (p) à la sortie du mélangeur (8).

8. Dispositif d'application (11) pour l'application d'un matériau de remplissage fluide dans une cavité (1) d'un composant (2), en particulier dans un module de batterie (2) d'une batterie électrique, notamment pour le remplissage d'interstice dans le module de batterie (2), comprenant
a) un applicateur (3; 12) pour l'injection du matériau de remplissage dans la cavité (1), un certain pression d'injection (p) s'établissant,
b) au moins un doseur (6, 7) pour l'acheminement du matériau de remplissage avec un débit d'acheminement (Q) déterminé vers l'applicateur (3; 12),
c) un premier capteur de pression (9; 16, 17) pour la mesure de la pression d'injection (p) du matériau de remplissage, et
d) une unité de commande (10) qui interroge le premier capteur de pression (9; 16, 17) et commande le doseur (6, 7),
**caractérisé en ce que**
e) l'unité de commande (10) exécute le procédé selon l'une des revendications précédentes.

9. Dispositif d'application (11) selon la revendication 8, **caractérisé en ce que** le premier capteur de pression (9; 16, 17) est relié mécaniquement à l'applicateur (3; 12) et est mobile avec l'applicateur (3; 12).

10. Dispositif d'application (11) selon la revendication 8 ou 9, **caractérisé par** un deuxième capteur de pression (9; 16, 17) pour la mesure de la pression d'injection (p) du matériau de remplissage.

11. Dispositif d'application (11) selon la revendication 10, **caractérisé en ce que**
a) le deuxième capteur de pression (9; 16, 17) est également relié mécaniquement à l'applicateur (3; 12) et est mobile avec l'applicateur (3; 12), ou
b) le deuxième capteur de pression est disposé séparément de l'applicateur, notamment
b1) sur un bouchon d'une ouverture de la cavité ou
b2) sur une paroi de la cavité,
c) les deux capteurs de pression (16, 17) sont de préférence montés aux extrémités opposées d'une traverse (14), afin de mesurer la pression d'injection (p) à deux orifices de montée sur le composant (2), les orifices de montée permettant une sortie de matériau de remplissage excédentaire de la cavité (1) du composant (2), et
d) l'applicateur (3; 12) est de préférence monté entre les deux capteurs de pression (16, 17) sur la traverse (14), notamment au centre, afin d'injecter le matériau de remplissage dans une orifice d'injection sur le composant (2).

12. Dispositif d'application (11) selon la revendication 11, **caractérisé en ce que**
a) les capteurs de pression (16, 17) sont montés sur la traverse (14) chacun dans un palier (21, 22), le palier (21, 22) permettant un mouvement d'évitement des capteurs de pression (16, 17) hors de leur position neutre par rapport à la traverse (14),
b) le mouvement d'évitement des capteurs de pression (16, 17) est de préférence perpendiculaire à la direction d'application de l'applicateur (12), 20
c) le palier (21, 22) comporte optionnellement un ressort ou une alimentation en air comprimé, afin de ramener le capteur de pression (6, 17) respectif dans sa position neutre.

13. Dispositif d'application selon la revendication 11 ou 12, **caractérisé en ce que**
a) l'applicateur (12) est relié à la traverse (14) par une fermeture à baïonnette (15),
b) la fermeture à baïonnette (15) comporte optionnellement également un passage de câble pour les câbles de capteur (23, 24) des capteurs de pression (16, 17).

14. Dispositif d'application selon l'une des revendications 10 à 13, **caractérisé en ce que**
a) chacun des capteurs de pression (16, 17) comporte une pointe conique (18), afin de permettre un auto-centrage du capteur de pression (16, 17) dans l'orifice de montée correspondant sur le composant (2),
b) l'applicateur (12) comporte une pointe conique (13), afin de permettre un auto-centrage de l'applicateur (12) dans l'orifice d'injection correspondant sur le composant (2), et/ou
b) la pointe conique (18) des capteurs de pression (16, 17) porte un joint d'étanchéité (19), afin d'obturer l'orifice de montée correspondant sur le composant (2) lorsque la pointe conique (18) du capteur de pression (16, 17) est introduite dans l'orifice de montée correspondant.

15. Dispositif d'application selon l'une des revendications 11 à 14, **caractérisé par** un robot d'application pour le positionnement de la traverse (14) avec l'applicateur (3; 12) fixé sur la traverse (14) et les capteurs de pression (16, 17) fixés sur la traverse (14).
